## Europäisches Patentamt
## European Patent Office
## Office européen des brevets

(11) Veröffentlichungsnummer: **0 357 681**

**B1**

(12) **EUROPÄISCHE PATENTSCHRIFT**

(45) Veröffentlichungstag der Patentschrift: **27.12.90**

(51) Int. Cl.⁵: **B 65 G 15/08,** B 65 G 15/00

(21) Anmeldenummer: **88905752.7**

(22) Anmeldetag: **09.06.88**

(86) Internationale Anmeldenummer:
**PCT/EP88/00511**

(87) Internationale Veröffentlichungsnummer:
**WO 88/09760 15.12.88 Gazette 88/27**

(54) **VERFAHREN UND VORRICHTUNG ZUR FORMGEBUNG VON GURTBÄNDERN FÜR DAS HINDURCHZIEHEN DURCH TRAGROLLENSTATIONEN.**

(30) Priorität: **11.06.87 DE 3719454**
**10.07.87 DE 3722838**

(43) Veröffentlichungstag der Anmeldung:
**14.03.90 Patentblatt 90/11**

(45) Bekanntmachung des Hinweises auf die
Patenterteilung:
**27.12.90 Patentblatt 90/52**

(84) Benannte Vertragsstaaten:
**AT BE CH DE FR GB IT LI LU NL SE**

(56) Entgegenhaltungen:
**EP-A-0 000 576**
**US-A-3 429 422**

(73) Patentinhaber: **O&K Orenstein & Koppel**
**Aktiengesellschaft**
**Brunsbütteler Damm 144-208**
**D-1000 Berlin 20 (DE)**

(72) Erfinder: **STEINKÖTTER, Franz-Albert**
**Buschgasse 65**
**D-5303 Walberberg (DE)**

Courier Press, Leamington Spa, England.

## Beschreibung

Die Erfindung betrifft ein Verfahren zum Hindurchziehen von zu einem Rohr geformten elastischen Gurtbändern durch entlang der Förderstrecke angeordnete Tragrollenstationen, die jeweils mit mehreren am Umfang gleichmäßig verteilt angeordneten Gurtstützrollen ausgerüstet sind, wobei das Gurtband im Betriebszustand einen Durchmesser aufweist, der durch den Abstand zwischen gegenüberliegenden Gurtstützrollen vorgegeben ist.

Das Ein- bzw. Hindurchziehen von zu einem Rohr geformten flachen Gurtbändern (Rollgurten) in bzw. durch die Tragrollenstationen ist mit erheblichen Schwierigkeiten verbunden, die mit zunehmender Länge der Förderstrecke zunehmen. Derartige Gurtbänder werden unter Einsatz einer Vielzahl von Helfern, die bemüht sind, den Gurt in seiner zusammengerollten Form festzuhalten, manuell eingezogen. Da das zu einem Rohr geformte Gurtband als flaches Gurtband hergestellt worden ist, ist es bestrebt, sich in den nicht geführten Bereichen zwischen den Tragrollenstationen zu öffnen. Der erforderliche Kraftaufwand — einerseits in Umfangsrichtung und andererseits in Längsrichtung — ist erheblich. Es hat sich jedoch erwiesen, daß, trotz der Vielzahl von Helfern, sich Beschädigungen an den Gurtkanten beim Hindurchziehen durch die einzelnen Tragrollenstationen nicht vermeiden lassen, da vor jeder Tragrollenstation ein neuer Einfädelvorgang durchgeführt werden muß.

Der US—A—3 429 422 ist ein Gurtförderer zu entnehmen, der zum staubarmen Transport von pulveroder stückförmigem Material einsetzbar ist. Der Gurtförderer wird durch ein an sich flaches Gurtband gebildet, welches am jeweiligen Förderstreckenende mittels Umlenkrollen umlenkbar ist. Durch sogenannte Formrollen wird das Gurtband im Anschluß an die jeweilige Umlenkung in eine rohrförmige Gestalt gebracht und in diesem Zustand durch entlang der Förderstrecke angeordnete Tragrollenstationen geführt, die mit mehreren am Außenumfang des Gurtbandes anliegenden Gurtstützrollen versehen sind. Der Betriebsdurchmesser des rohrförmigen Gurtbandes wird hierbei definiert durch den Abstand der einander gegenüberliegenden Gurtstützrollen. Wie bereits eingangs angesprochen, stellt sich auch hier das Problem, das zu einem Rohr geformte, an sich jedoch flache Gurtband vor Inbetriebnahme der Anlage durch die Vielzahl der Tragrollenstationen hindurchzuführen.

Der Erfindung liegt die Aufgabe zugrunde, ein Verfahren sowie eine Vorrichtung zu konzipieren, mit denen das Einziehen bzw. das Hindurchführen von zu einem Rohr geformten, an sich flachen Gurtbändern in bzw. durch Tragrollenstationen vereinfacht werden, wobei dieser Vorgang ohne größeren Kraftaufwand von nur wenigen Helfern oder sogar maschinell durchgeführt werden kann.

Diese Aufgabe wird verfahrensgemäß dadurch gelöst, daß die Gurtbänder vor dem Einziehen in die Tragrollenstationen zu einem Rohr mit einem kleineren Durchmesser als der Betriebsdurchmesser geformt werden, wobei eine von außen einwirkende Kraft die Gurtbänder in den Zustand des reduzierten Durchmessers hält, und daß die Gurtbänder während des Hindurchziehens durch die Tragrollenstationen in diesem Zustand gehalten werden.

Infolge des gegenüber dem Betriebsdurchmesser reduzierten Rohrdurchmessers kann das jeweils einzuziehende Gurtband problemlos und ohne größeren Kraftaufwand durch die einzelnen Tragrollenstationen hindurchgeführt werden, wodurch auch die sich überlappenden Gurtkanten nicht mehr aus dieser fixierten Position ausweichen können. Beschädigungen der Gurtkanten sind beim Hindurchführen durch die Tragrollenstationen somit nahezu ausgeschlossen.

Einem weiteren Gedanken der Erfindung gemäß werden die Gurtbänder mit Hilfe eines vorher durch die Tragrollenstationen geführten Zugmittels wie Seile oder dgl. durch die Tragrollenstationen hindurchgezogen, wobei vorzugsweise durch die Zugkraft des Zugmittels (Seiles) die am Umfang der zu einem Rohr geformten Gurtbänder wirkende Spannkraft erzeugt bzw. aufrechterhalten wird.

Die Gurtbänder werden im Bereich der jeweiligen Umlenkstation wieder aufgefaltet, wobei das jeweilige rohrförmige Gurtband in Umfangsrichtung entspannt wird. Anschließend findet die Umlenkung, beispielsweise um eine Unlenktrommel herum statt, wobei das dann flache Gurtband, wie bereits beschrieben, wieder zu einem Rohr geformt und in diesem Zustand (gegenüber dem Betriebsdurchmesser reduzierter Durchmesser) durch die das Gurtband zurückführenden Tragrollenstationen hindurchgeführt wird.

Damit das Hindurchziehen des Gurtbandes im Bereich der Verformungsstation erleichtert wird, wird weiterhin vorgeschlagen, hier ein Gleitmittel wie z.B. Talkum oder dgl. einzubringen, da in diesem Bereich gleitende Reibung (Metall/Gummi) gegeben ist.

Das Einziehen bzw. Hindurchziehen des Gurtbandes kann sowohl manuell als auch maschinell durchgeführt werden, wobei im letzteren Fall beispielsweise eine Winde das Seil aufwickelt, während das Gurtband in Längsrichtung bewegt wird. Diese Maßnahme ist insbesondere bei längeren Förderstrecken vorzuziehen.

Vorrichtungsgemäß wird die Aufgabe durch folgende Merkmale gelöst:

vor der ersten Tragrollenstation ist ein sich vom Durchmesser her verringerndes düsenartiges Gerät sowie eine damit zusammenwirkende Kammer angeordnet, die ein in Umfangsrichtung wirkendes Spannmittel enthält

das Spannmittel ist als endloser Netzstrumpf ausgebildet, der innerhalb der als Netzkammer ausgebildeten Kammer angeordnet ist

die Netzkammer umgibt den Bereich des geringsten Durchmessers des Gerätes und das Netz ist unter Aufbringung einer Umfangskraft für das Ein- bzw. Hindurchziehen der Gurtbänder auf den, vom durch den Abstand der in den einzelnen Tragrollenstationen gegenüberliegend angeordneten Gurtstützrollen vorgegebenen Betriebsdurchmesser her reduzierten Durchmesser der Gurtbänder, aufziehbar.

Ferner wird vorgeschlagen, das Gerät, in Längsrichtung gesehen, geteilt auszubilden, um es von einem bereits eingezogenen Gurtabschnitt entfernen zu können. Vorzugsweise sollte hierbei eine zweigeteilte Form gewählt werden, wobei beide Teile aufklappbar mittels Scharnieren miteinander verbunden sind. Der Düseneintritt ist hierbei, der flachen Form der Gurtbänder entsprechend, ebenfalls flach gehalten. Zur Beobachtung des Gurtverhaltens während des Muldungsvorganges von der flachen in die rohrförmige Gestalt, wird weiterhin vorgeschlagen, am Düseneintritt den Gurteinlauf (zweckmäßigerweise nach oben) weitestgehend offen auszubilden.

Im letzten Abschnitt der Düse ist deren Durchmesser kleiner als der erforderliche Betriebsdurchmesser des zu einem Rohr geformten Gurtbandes. Es ist hierbei sicherzustellen, daß der Durchmesser auch nach Aufziehen des Netzstrumpfes unterhalb des Betriebsdurchmessers bleibt, damit eine problemlose Hindurchführung durch die Tragrollenstationen sichergestellt werden kann.

Einem weiteren Gedanken der Erfindung gemäß ist das Düsenende wulstartig ausgebildet, um Beschädigungen am Gurtband zu vermeiden, das die Tendenz zur Auffaltung hat und am Düsenende zur verstärkten Kantenpressung neigt.

Wie bereits vorab angesprochen, ist um den Düsenendbereich herum eine Kammer (Trommel) angeordnet, die als Vorratsbehälter für das Netz (Netzstrumpf) dient. Es wird weitergehend vorgeschlagen, die Netzkammer im Bereich des Düsenendes stirnseitig mit einem Abschlußdeckel zu versehen. Dieser bildet einerseits einen Anschlag für das herauszuziehende Netz und andererseits umgibt er den Bereich des wulstartigen Düsenendes, wobei er selber eine weitere Düsenöffnung bildet, deren radialer Ansatz unter leichtem Berührungsschluß auf dem wulstartigen Düsenende aufliegt. Der zwischen Ansatz und dem Wulst gebildete Ringdurchlaß ist hierbei vorzugsweise so dimensioniert, daß das Netz bremsend hindurchgezogen werden kann. Der Ringdurchlaß kann jedoch durch Zwischenringe im Bereich zwischen Abschlußdeckel und Netzkammer an unterschiedliche Netzstärken angepaßt werden.

Vorzugsweise sind entlang des düsenförmigen Gerätes und/oder der Netzkammer mehrere, mittels Klappen verschließbare Kontrollöffnungen vorgesehen, um so evtl. Betriebsstörungen begegnen zu können. Durch die Klappen kann ferner die Überlappungsrichtung des Gurtes kontrolliert bzw. festgelegt werden.

Das das rohrförmige Gurtband unter Vorspannung umgebende Netz kann vor oder beim Anfahren der Anlage im Bereich seiner sich überlappenden Kanten aufgeschlitzt werden, wodurch sich das Gurtband entspannt und seinen Betriebsdurchmesser einnimmt, indem es sich an den es umgebenden Gurtstützrollen der Tragrollenstationen abstützt.

Durch die erfindungsgemäßen Merkmale wird erreicht, daß an sich flache, jedoch zu einem Rohr geformte Gurtbänder ohne Zwängungswiderstände an den Tragrollenstationen eingefädelt bzw. hindurchgeführt werden können. Die Erfindung ist sowohl für feststehende Tragrollen als auch für Tragrollengirlanden einsetzbar.

Die Erfindung ist in der Zeichnung dargestellt und wird wie folgt beschrieben. Es zeigen:

Fig. 1 u. 2: Prinzipskizze der erfindungsgemäßen Vorrichtung in verschiedenen Ansichten

Fig. 3: Ausschnitt durch den Verformungs-/Vernetzungsbereich.

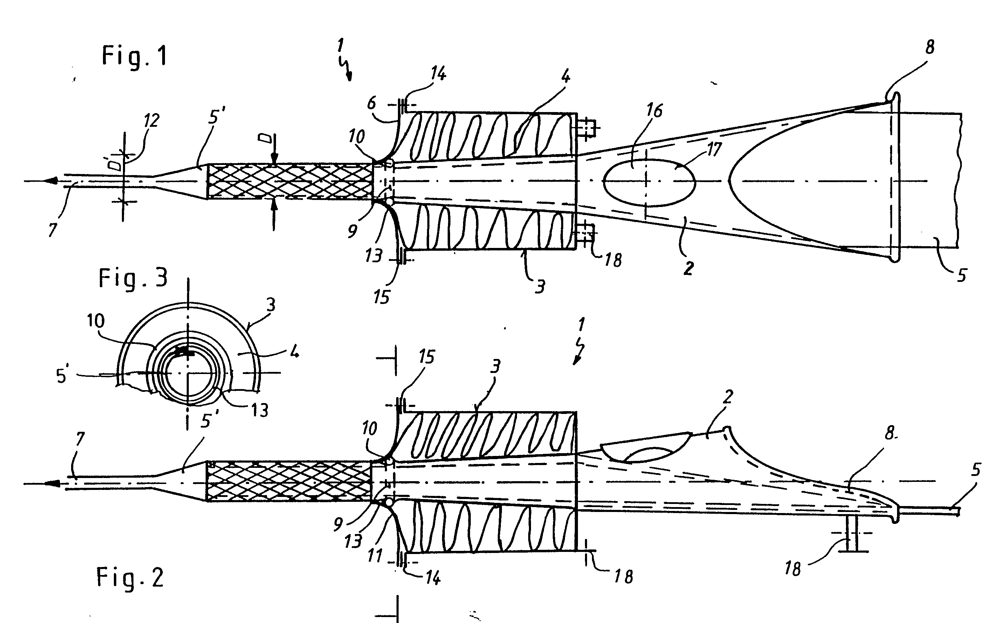

Die Figuren 1 und 2 zeigen die erfindungsgemäße Vorrichtung 1 in verschiedenen Ansichten. Dargestellt sind folgende Bauteile:

das düsenartige Gerät 2, die Kammer 3, das darin bevorratete Netz 4, das Gurtband in seiner flachen Form 5 sowie in zusammengerolltem Zustand 5', der Abschlußdeckel 6 sowie Seile 7 als Zugmittel. Das Gurtband in seiner flachen Form 5 wird in den ebenfalls flach gehaltenen Düseneintritt 8, der nach oben offen ist, eingeführt. Infolge des sich verringernden Durchmessers des düsenförmigen Gerätes 2 wird das Gurtband 5 in eine rohrförmige Gestalt 5' gebracht und tritt am Düsenende 9 aus. Der Durchmesser D' ist hierbei geringer als der durch den Tragrollenabstand bestimmte Betriebsdurchmesser D. Das Düsenende 9 ist mit einem Wulst 10 versehen, um Beschädigungen der Gurtkanten beim Austritt zu vermeiden. Der Abschlußdeckel 6 ist mit einem radialen Ansatz 11 versehen, der unter leichtem Berührungsschluß auf dem Wulst 10 aufliegt, so daß das Netz 4 unter leicht bremsendem Einfluß aus der Kammer 3 herausgezogen werden kann. Die Seile 7 ziehen das vom Netz 4 umgebene rohrförmige Gurtband 5' durch die nur angedeutete Tragrollenstation 12. Das Netz 4 wird in dem zwischen Wulst 10 und Ansatz 11 erzeugten Ringraum 13 selbsttätig hindurchgezogen. Um eine optimale Anpassung an verschiedene Netzstärken zu gewährleisten, können zwischen der Stirnseite 14 der Netzkammer 3 und dem Abschlußdeckel 6 weitere Zwischenringe 15 eingebracht werden. Um den Muldungsvorgang überwachen zu können, sind durch Klappen 16 verschießbare Öffnungen 17 vorgesehen. Die Vorrichtung 1 kann mittels Befestigungsanschlüssen 18 mit dem Boden oder anderen stationären Einrichtungen verbunden werden.

Figur 3 zeigt einen Ausschnitt des Verformungs-/Vernetzungsbereiches. Erkennbar sind die Kammer 3, das Netz 4 bzw. der dieses aufnehmende Raum, der Gurt 5', der Wulst 10 sowie der zwischen dem Wulst 10 und dem nicht weiter dargestellten radialen Ansatz 11 gebildete Ringraum 13.

**Patentansprüche**

1. Verfahren zum Hindurchziehen von zu einem Rohr geformten elastischen Gurtbändern (5, 5') durch entlang der Förderstrecke angeordnete Tragrollenstationen (12), die jeweils mit mehreren am Umfang gleichmäßig verteilt angeordneten Gurtstützrollen ausgerüstet sind, wobei das Gurtband (5') im Betriebszustand einen Durchmesser (D) aufweist, der durch den Abstand zwischen gegenüberliegenden Gurtstützrollen vorgegeben ist, dadurch gekennzeichnet, daß die Gurtbänder (5) vor dem Einziehen in die Tragrollenstationen zu einem Rohr (5') mit einem kleineren Durchmesser (D') als der Betriebsdurchmesser (D) geformt werden, wobei eine von außen einwirkende Kraft die Gurtbänder (5') in dem Zustand des reduzierten Durchmessers (D') hält, und daß die Gurtbänder (5') während des Hindurchziehens durch die Tragrollenstationen (12) in diesem Zustand gehalten werden.

2. Verfahren nach Anspruch 1, dadurch gekennzeichnet, daß die Gurtbänder (5') mit Hilfe eines vorher durch die Tragrollenstationen (12) geführten Zugmittels (7) durch die Tragrollenstationen hindurchgezogen werden.

3. Verfahren nach Anspruch 2, dadurch gekennzeichnet, daß durch die Zugkraft des Zugmittels (7) die am Umfang der Gurtbänder (5') wirkende Spannkraft erzeugt und/oder aufrecht erhalten wird.

4. Verfahren nach den Ansprüchen 1 bis 3, dadurch gekennzeichnet, daß die Gurtbänder (5') im Bereich der jeweiligen Umlenkstation wieder aufgefaltet, in diesem Zustand umgelenkt und anschließend wieder zu einem Rohr mit einem geringeren Durchmesser (D') als der Betriebsdurchmesser (D) geformt und in diesem Zustand durch die die Gurtbänder (5') zurückführenden Tragrollenstationen (12) hindurchgeführt werden.

5. Verfahren nach den Ansprüchen 1 bis 4, dadurch gekennzeichnet, daß die zu einem Rohr geformten Gurtbänder (5) vor dem Hindurchziehen durch eine Verformungsstation (1) im Bereich ihrer äußeren Umfangsfläche mit einem Gleitmittel überzogen werden.

6. Vorrichtung zum Einziehen von zu einem Rohr geformten elastischen Gurtbändern (5, 5') in entlang der Förderstrecke angeordneten Tragrollenstationen (12), gekennzeichnet durch folgende Merkmale:

vor der ersten Tragrollenstation ist ein sich vom Durchmesser her verringerndes düsenartiges Gerät (2) sowie eine damit zusammenwirkende Kammer (3) angeordnet, die ein in Umfangsrichtung wirkendes Spannmittel (4) enthält

das Spannmittel (4) ist als endloser Netzstrumpf ausgebildet, der innerhalb der als Netzkammer ausgebildeten Kammer (3) angeordnet ist

die Netzkammer (3) umgibt den Bereich des geringsten Durchmessers des Gerätes (2) und das Netz (4) ist unter Aufbringung einer Umfangskraft für das Ein- bzw. Hindurchziehen der Gurtbänder (5') auf den, vom durch den Abstand der in den einzelnen Tragrollenstationen gegenüberliegend angeordneten Gurtstützrollen vorgegebenen Betriebsdurchmesser (D) her reduzierten Durchmesser (D') der Gurtbänder (5'), aufziehbar.

7. Vorrichtung nach Anspruch 6, dadurch gekennzeichnet, daß das düsenförmige Gerät (2), in Längsrichtung gesehen, geteilt ausgebildet ist.

8. Vorrichtung nach den Ansprüchen 6 und 7, dadurch gekennzeichnet, daß das düsenförmige Gerät (2) zweigeteilt ausgebildet und mittels Scharnieren aufklappbar ist.

9. Vorrichtung nach den Ansprüchen 6 bis 8, dadurch gekennzeichnet, daß der Düseneintritt (8), den Gurtbändern (5) entsprechend, flach gehalten ist.

10. Vorrichtung nach Anspruch 9, dadurch gekennzeichnet, daß der Bereich des Düseneintrittes (8) nach einer Seite, insbesondere nach oben, weitestgehend offen gehalten ist.

11. Vorrichtung nach den Ansprüchen 6 bis 10, dadurch gekennzeichnet, daß das Düsenende (9) wulstartig ausgebildet ist (10).

12. Vorrichtung nach den Ansprüchen 6 bis 11, dadurch gekennzeichnet, daß die Netzkammer (3) im Bereich des Düsenaustrittes (9) stirnseitig mit einem Abschlußdeckel (6) versehen ist.

13. Vorrichtung nach Anspruch 12, dadurch gekennzeichnet, daß der Abschlußdeckel (6) den Bereich des wulstartigen Düsenendes (10) umgibt und selber eine Düsenöffnung bildet, deren radialer Ansatz (11) unter leichtem Berührungsschluß auf dem wulstartigen Düsenende (10) aufliegt.

14. Vorrichtung nach den Ansprüchen 12 und 13, dadurch gekennzeichnet, daß der zwischen dem Ansatz (11) und dem wulstartigen Düsenende (10) gebildete Ringdurchlaß (13) so ausgebildet ist, daß das Netz (4) bremsend hindurchziehbar ist.

15. Vorrichtung nach den Ansprüchen 12 bis 14, dadurch gekennzeichnet, daß zwischen dem Abschlußdeckel (6) und der Netzkammer (3) der Netzstärke angepaßte Zwischenringe einbringbar sind.

16. Vorrichtung nach den Ansprüchen 6 bis 15, gekennzeichnet durch mehrere im Bereich des düsenförmigen Gerätes (2) und/oder der Netzkammer (3) angeordnete durch Klappen (16) verschließbare Kontrollöffnungen (17).

17. Vorrichtung nach den Ansprüchen 6 bis 16, dadurch gekennzeichnet, daß das das rohrförmige Gurtband (5') umgebende Netz (4) im Umlenkbereich und/oder in jedem Bereich der Förderstrecke im Überlappungsbereich des Gurtbandes aufschlitzbar ist.

**Revendications**

1. Procédé pour tirer des courroies élastiques (5, 5'), formées en un tube, à travers des postes de rouleaux porteurs (12) qui sont disposés le long de la voie de transport et qui sont équipés chacun de plusieurs rouleaux de soutien de courroie régulièrement répartis sur la périphérie, la courroie (5') présentant à l'état de service un diamètre (D) qui est alloué par la distance entre des rouleaux de soutien de courroie en vis-à-vis, caractérisé en ce que les courroies (5), avant d'être tirées dans les postes de rouleaux porteurs, sont formées en un tube (5') de diamètre (D') inférieur au diamètre de service (D), une force agissant de l'extérieur maintenant les courroies (5') dans l'état de diamètre réduit (D'), et en ce que les courroies (5') sont maintenues dans cet état pendant la traction à travers les postes de rouleaux porteurs (12).

2. Procédé selon la revendication 1, caractérisé en ce que les courroies (5') sont tirées à travers les postes de rouleaux porteurs (12) à l'aide d'un moyen de traction (7) préalablement guidé à travers ces postes.

3. Procédé selon la revendication 2, caractérisé en ce que la force de traction du moyen de traction (7) produit et/ou maintient la force de serrage agissant sur la périphérie des courroies (5').

4. Procédé selon les revendications 1 à 3, caractérisé en ce que les courroies (5') sont remises à plat dans la région du poste de renvoi respectif, renvoyées dans cet état, puis à nouveau formées en un tube de diamètre (D') inférieur au diamètre de service (D) et passées dans cet état à travers les postes de rouleaux porteurs (12) ramenant les courroies (5').

5. Procédé selon les revendications 1 à 4, caractérisé en ce que les courroies (5) formées en un tube sont, avant d'être tirées à travers un poste de déformation (1), revêtues d'un agent antifriction dans la région de leur face périphérique extérieure.

6. Dispositif pour tirer des courroies élastiques (5, 5'), formées en' un tube, dans des postes de rouleaux porteurs (12) qui sont disposés le long de la voie de transport, caractérisé par les caractéristiques suivantes:

un appareil du genre filière (2), dont le diamètre va en se rétrécissant, et une chambre coopérante (3), qui contient un moyen de serrage (4) agissant dans le sens périphérique, sont disposés avant le premier poste de rouleaux porteurs,

le moyen de serrage (4) est réalisé sous la forme d'un manchon en filet sans fin, qui est disposé à l'intérieur de la chambre (3) conçue comme chambre de filet,

la chambre de filet (3) entoure la région de plus faible diamètre de l'appareil (2) et le filet (4) peut, en appliquant une force périphérique pour introduire ou faire passer par traction les courroies (5'), être enfilé par traction sur le diamètre (D') des courroies (5'), qui est réduit par rapport au diamètre de service (D) alloué par la distance entre les rouleaux de soutien de courroie disposés en vis-à-vis dans les différents postes de rouleaux porteurs.

7. Dispositif selon la revendication 6, caractérisé en ce que l'appareil en forme de filière (2), vu dans le sens longitudinal, est réalisé en plusieurs parties.

8. Dispositif selon les revendications 6 et 7, caractérisé en ce que l'appareil en forme de filière (2) est réalisé en deux parties, et peut être ouvert à l'aide de charnières.

9. Dispositif selon les revendications 6 à 8, caractérisé en ce que l'entrée de la filière (8), d'une manière correspondante aux courroies (5), est maintenue plate.

10. Dispositif selon la revendication 9, caractérisé en ce que la région de l'entrée (8) de la filière est maintenue la plus largement ouverte possible sur un côté, notamment vers le haut.

11. Dispositif selon les revendications 6 à 10, caractérisé en ce que l'extrémité (9) de la filière est réalisée à la manière d'un bourrelet (10).

12. Dispositif selon les revendications 6 à 11, caractérisé en ce que la chambre de filet (3) est munie du côté frontal, dans la région de la sortie (9) de la filière, d'un couvercle de fermeture (6).

13. Dispositif selon la revendication 12, caractérisé en ce que le couvercle de fermeture (6) entoure la région de l'extrémité du genre bourrelet (10) de la filière et forme lui-même une ouverture de filière dont l'épaulement radial (11) s'applique sur l'extrémité du genre bourrelet (10) de la filière en réalisant un assemblage par contact léger.

14. Dispositif selon les revendications 12 et 13, caractérisé en ce que le passage annulaire (13) formé entre l'épaulement (11) et l'extrémité du genre bourrelet (10) de la filière est réalisé de telle sorte que le filet (4) peut être tiré à travers ce passage de manière freinée.

15. Dispositif selon les revendications 12 à 14, caractérisé en ce que des bagues intermédiaires, adaptées à l'épaisseur du filet, peuvent être introduites entre le couvercle de fermeture (6) et la chambre de filet (3).

16. Dispositif selon les revendications 6 à 15, caractérisé par plusieurs ouvertures de contrôle (17) qui peuvent être obturées par des volets (16) et qui sont disposées dans la région de l'appareil en forme de filière (2) et/ou de la chambre de filet (3).

17. Dispositif selon les revendications 6 à 16, caractérisé en ce que le filet (4) entourant la courroie tubulaire (5') peut, dans la région de renvoi et/ou dans chaque région de la voie de transport, être ouvert en le fendant dans la région de chevauchement de la courroie.

**Claims**

1. Method for drawing elastic belt bands (5, 5'), formed into a tube, through carrying roller stations (12) arranged along the conveyor run and provided in each case with several belt-supporting rollers arranged evenly on the periphery, the belt band (5') in the operating state having a diameter (D) which is determined by the distance between opposed belt-supporting rollers, characterised in that the belt bands (5), before being drawn into the carrying roller stations, are formed into a tube (5') having a smaller diameter (D') than the operating diameter (D), a force acting from the outside holding the belt bands (5') in the reduced-diameter state (D'), and that the belt bands (5') are maintained in this state while being drawn through the carrying roller stations (12).

2. Method according to Claim 1, characterised in that the belt bands (5') are pulled through the carrying roller stations by means of a traction means (7) previously led through the carrying roller stations (12).

3. Method according to Claim 2, characterised in that the tensioning force acting on the periphery of the belt bands (5') is produced and/or maintained by means of the tensile force of the traction means (7).

4. Method according to Claims 1 to 3, characterised in that the belt bands (5'), in the region of the respective return station, are unfolded again, deflected in this state, and then formed again into a tube having a smaller diameter (D') than the operating diameter (D), and led in this state through the carrying roller stations (12) returning the belt bands (5').

5. Method according to Claims 1 to 4, characterised in that the belt bands (5) formed into a tube, before being drawn through a shaping station (1), are coated with a lubricant in the region of their outer peripheral surface.

6. Apparatus for drawing elastic belt bands (5, 5'), formed into a tube, into carrying roller stations (12) arranged along the conveyor run, characterised by the following features:

the first carrying roller station there is arranged a nozzle-like apparatus (2) tapering in diameter, and also a chamber (3) co-operating therewith which contains a tensioning means (4) acting in a peripheral direction

the tensioning means (4) is in the form of an endless net stocking which is arranged within the chamber (3) constructed as a net chamber

the net chamber (3) surrounds the region of the smallest diameter of the apparatus (2), and the net (4), with the application of a peripheral force, for the drawing-in or drawing through of the belt bands (5'), can be pulled onto the diameter (D') of the belt bands (5') which is reduced from the operating diameter (D) determined by the distance between the opposed belt-supporting rollers arranged in the individual carrying roller stations.

7. Apparatus according to Claim 6, characterised in that the nozzle-like apparatus (2), seen in a longitudinal direction, is of divided construction.

8. Apparatus according to Claims 6 and 7, characterised in that the nozzle-shaped apparatus (2) is divided into two parts and can be opened out by means of hinges.

9. Apparatus according to Claims 6 to 8, characterised in that the nozzle inlet (8), corresponding to the belt bands (5), is kept flat.

10. Apparatus according to Claim 9, characterised in that the region of the nozzle inlet (8) is kept as open as possible on one side, especially towards the top.

11. Apparatus according to Claims 6 to 10, characterised in that the nozzle end (9) is of bead-like construction (10).

12. Apparatus according to Claims 6 to 11, characterised in that the net chamber (3), in the region of the nozzle outlet (9), is provided on the end face with a cover plate (6).

13. Apparatus according to Claim 12, characterised in that the cover plate (6) surrounds the region of the bead-like nozzle end (10) and itself forms a nozzle opening, the radial extension (11) of which bears with light contact against the bead-like nozzle end (10).

14. Apparatus according to Claims 12 and 13, characterised in that the annular throat (13) formed between the extension (11) and the bead-like nozzle end (10) is so constructed that the net (4) can be drawn through with a checking action.

15. Apparatus according to Claims 12 to 14, characterised in that intermediate rings matched to the net thickness can be introduced between the cover plate (6) and the net chamber (3).

16. Apparatus according to Claims 6 to 15, characterised by several inspection apertures (17) which are arranged in the region of the nozzle-like apparatus (2) and/or the net chamber (3) and can be closed by means of flaps (16).

17. Apparatus according to Claims 6 to 16, characterised in that the net (4) surrounding the tubular belt band (5') can be slit open, in the overlapping region of the belt band, in the deflection region and/or in each region of the conveyor run.

Fig.1

Fig.2

Fig.3

1